# EUROPÄISCHE PATENTSCHRIFT

(11) **EP 0 492 286 B1**
(45) Veröffentlichungstag und Bekanntmachung des Hinweises auf die Patenterteilung: **14.05.1997**
(21) Anmeldenummer: 91121274.4
(22) Anmeldetag: 11.12.1991
(51) Int. Cl.: B60R 16/02, H02J 1/00

(54) **Stromversorgung für Kraftfahrzeuge**
Power supply for vehicle
Alimentation en courant d'un véhicule

(30) Priorität: 21.12.1990 DE 4041220
(43) Veröffentlichungstag der Anmeldung: 01.07.1992
(73) Patentinhaber: VOGT electronic Aktiengesellschaft, D-94128 Obernzell (DE)
(72) Erfinder: Hartmann, Uwe, Ing. grad., - (DE); Mai, Udo, Ing. grad., W-8391 Untergriesbach (DE)
(74) Vertreter: Hieke, Kurt

(56) Entgegenhaltungen:
- WO-A-89/06062
- DE-A- 3 229 714
- DE-A- 3 236 092
- PATENT ABSTRACTS OF JAPAN vol. 14, no. 373 (M-1009) 13. August 1990 & JP-A-02 136 343 (KOITO MFG) 24. Mai 1990

## Beschreibung

Die Erfindung bezieht sich auf eine Stromversorgung für Kraftfahrzeuge gemäß einleitenden Teil des Patentanspruchs 1.

Bei den bekannten Stromversorgungen für Kraftfahrzeuge dieser Art wird für jeden elektrischen Verbraucher ein eigener Spannungswandler eingesetzt, der die jeweils benötigte Betriebsspannung direkt aus der Niedervolt-Batteriespannung des Bordnetzes erzeugt. Diese herkömmliche Stromversorgungstechnik hat den großen Nachteil, daß wegen der für die Hochvolt-Verbraucher benötigten großen Spannungsunterschiede zwischen der niedrigen Batteriespannung und der hohen Verbraucherspannung der Transformator des jeweiligen Spannungswandlers ein sehr großes Übersetzungsverhältnis aufweisen muß, das in Verbindung mit den für den Spannungswandler vorgesehenen hohen Schaltfrequenzen zu sehr großen Verlusten führt. Außerdem bedingt der Einsatz je eines eigenen Spannungswandlers für die Mittelvolt-Verbraucher, die anders als die Hochvolt-Verbraucher problemlos mit gleicher Betriebsspannung betrieben werden können, einen hohen baulichen Aufwand. Hinzu kommt, daß die Niedervolt Bordspannung des Kraftfahrzeugs in der Regel nicht stabilisiert ist, für die Spannungswandler primärseitig aber eine stabilisierte Spannung benötigt wird, und daß demzufolge bisher für jeden einzelnen Spannungswandler eine eigene Spannungsstabilisierung vorgesehen werden mußte.

Aus DE-A-32 36 092 sind Stromversorgungen bekannt, bei denen ein Gleichstrom-Gleichstrom-Wandler aus dem akkumulatorgespeisten Niedervolt-Bordnetz eine im Hochvolt-Bereich liegende, impulsartig unterbrochene Gleichspannung von 1,5 kV erzeugt, die von abhängig vom Kurbelwellenwinkel gesteuerten Thyristoren an Spannungserhöhungstransformatoren zur Speisung von je einer zugehörigen Zündkerze angelegt wird.

Der Erfindung liegt die Aufgabe zugrunde, eine Stromversorgung für Kraftfahrzeuge gemäß dem einleitenden Teil des Patentanspruchs 1 zu schaffen, die bei weitem weniger verlustbehaftet ist als die eingangs besprochenen bekannten Stromversorgungen, und auch mit einem geringeren baulichen Aufwand realisiert werden kann.

Die vorstehend angegebene Aufgabe wird durch die im Patentanspruch 1 angegebenen Merkmale gelöst.

Bei der erfindungsgemäßen Stromversorgung wird die Niedervolt-Bordspannung, die bei Personenkraftwagen gewöhnlich 12 V beträgt, auf eine demgegenüber höhere, stabilisierte mittlere Spannung von z.B. 150 V gebracht und an eine Mittelvolt-Spannungsschiene gelegt, an die alle anderen, mit einer höheren als der Niedervolt-Bordspannung arbeitenden elektrischen Verbraucher des Kraftfahrzeugs gemeinsam angeschlossen werden, und zwar die Mittelvolt-Verbraucher direkt und die Hochvolt-Verbraucher jeweils über einen eigenen Spannungswandler, der die Mittelspannung weiter auf die jeweils benötigte Hochvolt-Spannung herauftransformiert. Für die einzelnen Hochvolt-Spannungswandler ergibt sich daraus der Vorteil, daß sie einerseits wegen ihrer gegenüber der bisherigen Stromversorgungstechnik erhöhten Eingangsspannung nur noch eine bei weitem geringere Spannungsübersetzung bewältigen müssen (z.B. für die Hochvolt-Scheinwerfer nur noch eine 80-fache Spannungsübersetzung anstelle einer 1000-fachen bei der herkömmlichen Schaltungstechnik) und damit weitaus weniger verlustbehaftet sind, und daß andererseits für sie durch die stabilisierte Eingangsspannung von der Mittelvolt-Spannungsschiene her ein geringerer Schaltungsaufwand benötigt wird. Die nunmehr im Kraftfahrzeug allgemein verfügbare Mittelvolt-Spannungsschiene erlaubt es problemlos, auch elektrische Verbraucher, die bisher üblicherweise direkt an das Niedervolt-Bordnetz angeschlossen wurden, mit der höheren Betriebsspannung der Mittelvolt-Schiene zu betreiben, was den Vorteil hat, daß für den Anschluß infolge der bei gleicher Leistung geringeren Stromstärke kleinere Kabelquerschnitte benutzt werden können. Hinzu kommt, daß im Gegensatz zu der bisherigen Stromversorgungstechnik nicht mehr für jeden einzelnen von mehreren Mittelvolt-Verbrauchern ein eigener Spannungswandler benötigt wird. Direkt an die Mittelvolt-Spannungsschiene anschließbare Mittelvolt-Verbraucher sind z.B. Hi-Fi-Kraftverstärker, elektrische Fensterheber, Zentralverriegelungen, Heckscheibenheizungen und dergleichen mehr.

Die heutzutage verfügbaren Spannungswandler haben eine so hohe Qualität, daß kaum zu befürchten ist, daß der die Mittelvolt-Spannungsschiene versorgende DC/DC-Wandler ausfällt, wodurch auch sicherheitsrelevante Verbraucher betroffen sein könnten. Ein gewisses Restrisiko läßt sich zudem auf einfache Weise durch die in den Patentansprüchen 2 und 3 gekennzeichneten Maßnahmen praktisch ausschließen. Dies kann gemäß Patentanspruch 2 durch Redundanz in Form eines zweiten DC/DC-Spannungswandlers für die Mittelvolt-Spannungsschiene oder gemäß Patentanspruch 3 durch Überwachen dieser Schiene und automatisches Umschalten bei Spannungsausfall auf sicherheitsrelevante Ersatzsysteme, die aus Sicherheitsgründen weiterhin an der Niedervolt-Batteriespannung betrieben werden, erreicht werden.

Bei redundanten Systemen gemäß Anspruch 2 wird dem Fahrer vorzugsweise der Ausfall des betroffenen DC/DC-Wandlers angezeigt, damit der Wegfall der Redundanz nicht möglicherweise für längere Zeit unbemerkt bleibt.

Bei Erhöhung der Sicherheit mit der Maßnahme gemäß Patentanspruch 3 werden vorzugsweise als Ersatzsystem zumindest die Fern- und/oder Nebelscheinwerfer von vornherein aus dem Niedervolt-Bordnetz betrieben und bei Ausfall der Mittelvolt-Schiene eingeschaltet.

Die erfindungsgemäße Stromversorgung wird nachstehend an zwei Ausführungsbeispielen anhand der Zeichnung noch näher erläutert.

Die Zeichnung zeigt die Blockschaltbilder der beiden Ausführungsformen.

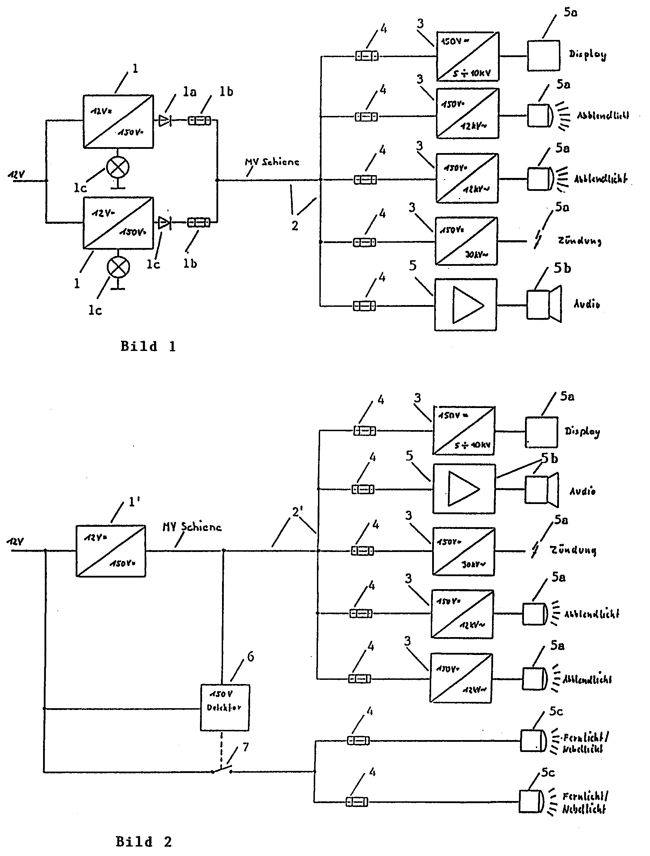

Bei der Ausführungsform gemäß Bild 1 wird die Niedervolt-Bordspannung (Batteriespannung) von 12 V durch zwei zueinander parallel geschaltete DC/DC-Wandler 1 auf eine stabilisierte Gleichspannung von 150 V herauf transformiert und einer Mittelvolt-Schiene 2 zugeführt, an die die elektrischen Verbraucher gemeinsam angeschlossen sind. Der Ausgang eines jeden Wandlers 1 ist gesondert über eine Entkopplungsdiode 1a und eine Sicherung 1b an die Mittelvolt-Schiene 2 geführt. An die Verbindung zwischen der jeweiligen Diode 1a und der Sicherung 1b ist eine Anzeigelampe 1c für den Betriebszustand des jeweiligen Wandlers 1 angeschlossen.

Gemäß Bild 1 sind an die Mittelvolt-Schiene 2 vier Hochvolt-Verbraucher 5a in Form eines Displays, der beiden Kfz-Abblendlichter und der Zündung jeweils über einen eigenen Spannungswandler 3 herkömmlicher Bauart, z.B. ein Schaltnetzteil, angeschlossen. In die Verbindung zwischen der Mittel-volt-Schiene 2 und den Eingang des jeweiligen Spannungswandlers 3 ist eine Sichtung 4 eingebaut. Ein fünfter elektrischer Verbraucher 5, der zu seinem Betrieb nur die Spannung der Mittelvolt-Spannungsschiene 2 benötigt, ist in Bild 1 ganz unten als Kraftverstärker 5 für die Audio-Anlage 5b des Kraftfahrzeugs dargestellt und direkt, d.h. ohne Zwischenschaltung eines zugehörigen Spannungswandlers, an die Mittelvolt-Schiene 2 angeschlossen. Auch hier ist in die Verbindung zwischen der Mittelvolt-Schiene 2 und dem Kraftverstärker 5 eine Sicherung 4 eingebaut.

Wenn beide DC/DC-Spannungswandler 1 ordnungsgemäß arbeiten, leuchten beide Anzeigelampen 1c. Sobald jedoch einer der beiden Spannungswandler 1 ausfällt, erlischt die ihm zugeordnete Lampe 1c, so daß der Fahrer hierauf aufmerksam gemacht wird. Beide DC/DC-Spannungswandler sind so ausgelegt, daß jeder für sich allein die gesamte Stromversorgung für die von der Mittelvolt-Spannungsschiene 2 betriebenen Verbraucher und anderweitigen Bauelemente gewährleisten kann.

Beim Ausführungsbeispiel gemäß Bild 2 wird die Mittelvolt-Spannungsschiene 2' nur mittels eines einzigen DC/DC-Spannungswandlers 1' vom Niedervolt-Bordnetz her mit der Gleichspannung von 150 V versorgt. Der Betriebszustand dieses DC/DC-Spannungswandlers 1' wird laufend mittels eines Detektors 6 überwacht, der einen Schalter 7 schließt, wenn der DC/DC-Wandler 1' aus irgendeinem Grunde ausfallen sollte. Der Schalter 7 befindet sich in einer gemeinsamen Verbindungsleitung zwischen dem Niedervolt-Bordnetz (12 V) und den beiden Fernlichtern und/oder Nebellichtern des Kraftfahrzeugs, die somit bei Ausfall des DC/DC-Wandlers 1'als Ersatzsystem für die von der Mittelvolt-Schiene 2' her betriebenen Abblendlichter des Kraftfahrzeugs eingeschaltet werden. Die an die Mittelvolt-Schiene 2' angeschlossenen elektrischen Verbraucher sind die gleichen wie beim Ausführungsbeispiel gemäß Bild 1.

## Patentansprüche

1. Stromversorgung für Kraftfahrzeuge mit elektrischen Verbrauchern (5a), die eine Hochvolt-Spannung als Betriebsspannung benötigen, und mit elektrischen Verbrauchern (5), die mit einer mittleren Spannung als Betriebsspannung betrieben werden, wobei die Verbraucher (5, 5a) über Spannungswandler (1, 3) aus dem auf Niedervolt-Batteriespannung (12V) liegenden Bordnetz mit elektrischer Energie versorgt werden und für jeden eine Hochvolt-Betriebsspannung erfordernden Verbraucher (5a) ein eigener Spannungswandler (3) vorgesehen ist, **dadurch gekennzeichnet**, daß die Spannungswandler (3) für die Hochvolt-Verbraucher (5a) eingangsseitig und die Mittelvolt-Verbraucher (5) direkt gemeinsam an eine Mittelvolt-Spannungsschiene (2; 2') angeschlossen sind, die mittels einer vom Niedervolt-Bordnetz (12V) gespeisten, spannungsgeregelten DC/DC-Wandleranordnung (1,1:1') auf einer stabilisierten Mittelvolt-Spannung (150V) gehalten ist.

2. Stromversorgung nach Anspruch 1, **dadurch gekennzeichnet**, daß die DC/DC-Wandleranordnung (1,1) aus mindestens zwei funktionell gleichwertigen, jeweils zum Erfüllen der Gesamtfunktion fähigen DC/DC-Wandlern (1) besteht, die zueinander parallel zwischen das Niedervolt-Bordnetz (12V) und die Mittelvolt-Spannungsschiene (2) geschaltet sind.

3. Stromversorgung nach Anspruch 1, **gekennzeichnet durch** eine Einrichtung (6,7) zum Überwachen der Mittelvolt-Spannungsschiene (2') und zum direkten Anschalten von sicherheitsrelevanten Niedervolt-Verbrauchern (5c), die spannungswandlergespeisten, sicherheitsrelevanten Verbrauchern (5a) funktionell im wesentlichen gleichwertig sind, an das Niedervolt-Bordnetz (12V) bei Ausfall der Mittelvolt-Spannung (150V).

## Claims

1. Current supply for motor vehicles with electrical consumers (5a) which need a high-volt voltage as operating voltage and with electrical consumers (5) which are operated with medium voltage as operating voltage, wherein the consumers (5, 5a) are supplied by way of voltage converters (1, 3) with electrical energy from the on-board power supply lying at low-volt battery voltage (12V) and an own voltage converter (3) is provided for each consumer (5a) requiring a high-volt operating voltage, characterised thereby that the voltage converters (3) for the high-volt consumers (5a) are connected at the input side, and the medium-volt voltage directly, to a medium-volt voltage rail (2; 2'), which is kept at a stabilised medium-volt voltage (150V) by means of a voltage-regulated DC/DC converter arrangemnt (1,1; 1') supplied by the low-volt on-board power supply (12V).

2. Current supply according to claim 1, characterised thereby that the DC/DC converter arrangement (1,1) consists of at least two functionally equivalent DC/DC converters (1) which are each capable of fulfilling the entire function and which are connected in parallel to one another between the low-volt on-board power supply (12V) and the medium-voltage rail (3).

3. Current supply according to claim 1, characterised by an equipment (6, 7) for the monitoring of the medium-volt voltage rail (2) and for the direct connecting of low-volt consumers (5a) relevant to safety, which are substantially equivalent in function to consumers (5) relevant to safety and supplied by voltage converters, to the low-volt on-board power supply (12V) in the case of failure of the medium-volt voltage (150V).

## Revendications

1. Alimentation en courant de véhicules automobiles comportant des appareils (5a) consommant de l'électricité, qui nécessitent comme tension de fonctionnement une haute tension, et comportant des appareils (5) consommant de l'électricité, qui fonctionnent à une tension moyenne comme tension de fonctionnement, les appareils (5, 5a) de consommation étant alimentés en énergie électrique, à partir du réseau de bord se trouvant à la basse tension (12 V) de la batterie, par l'intermédiaire de convertisseurs (1, 3) de tension, et un convertisseur (3) de tension proprement dit étant prévu pour chaque appareil (5a) de consommation nécessitant une haute tension de fonctionnement, caractérisée en ce que les convertisseurs (3) de tension pour les appareils (5a) de consommation haute tension sont connectés en entrée à un rail (2 ; 2') de moyenne tension et les appareils (5) de consommation de moyenne tension sont connectés directement en commun à ce rail, qui est maintenu à une moyenne tension (150 V) stabilisée au moyen d'un dispositif (1, 1 ; 1') de conversion continu/continu alimenté par le réseau de bord (12 V) à basse tension et régulé en tension.

2. Alimentation en courant suivant la revendication 1, caractérisée en ce que le dispositif (1, 1) de conversion continu/continu est constitué d'au moins deux convertisseurs (1) continu/continu, qui ont des fonctions équivalentes, qui sont aptes chacun à remplir la fonction totale et qui sont branchés en parallèle l'un par rapport à l'autre entre le réseau de bord (12 V) à basse tension et le rail (2) de moyenne tension.

3. Alimentation en courant suivant la revendication 1, caractérisée par un dispositif (6, 7) de contrôle du rail (2') de moyenne tension et de branchement direct d'appareils (5c) de consommation de basse tension déterminants pour la sécurité, dont la fonction est sensiblement équivalente à des appareils (5a) de consommation alimentés par convertisseur de tension et déterminants pour la sécurité, au réseau de bord (12 V) basse tension en cas de panne de la moyenne tension (150 V).
